# EUROPEAN PATENT SPECIFICATION

(11) **EP 2 917 523 B1**
(45) Date of publication and mention of the grant of the patent: **29.03.2017**
(21) Application number: 12888001.0
(22) Date of filing: 09.11.2012
(51) Int. Cl.: F01N 3/20, B01D 53/94

(54) **APPARATUS AND METHOD FOR AQUEOUS UREA SOLUTION CONDITIONING AND INJECTION CONTROL IN A SELECTIVE CATALYTIC REDUCTION SYSTEM**
VORRICHTUNG UND VERFAHREN ZUR AUFBEREITUNG VON WÄSSRIGER HARNSTOFFLÖSUNG UND EINSPRITZSTEUERUNG IN EINEM SELEKTIVEN KATALYTISCHEN REDUKTIONSSYSTEM
DISPOSITIF ET PROCÉDÉ POUR LE CONDITIONNEMENT D'UNE SOLUTION AQUEUSE D'URÉE ET CONTRÔLE D'INJECTION DANS UN SYSTÈME DE RÉDUCTION CATALYTIQUE SÉLECTIVE

(43) Date of publication of application: 16.09.2015
(73) Proprietor: Mack Trucks, Inc., Greensboro, NC 27409 (US)
(72) Inventor: BROOKS, Jeffrey A., Greencastle, Pennsylvania 17225 (US); BERGH, Patrik, S-891 77 Järved (SE)
(74) Representative: Volvo Technology Corporation
(86) International application number: PCT/US2012/064262
(87) International publication number: WO 2014/074100

(56) References cited:
- EP-A1- 1 338 562
- JP-A- 2011 226 434
- US-A- 5 976 475
- US-A1- 2011 005 210
- US-A1- 2011 124 495
- US-A1- 2012 045 378
- US-B1- 6 436 359
- US-B1- 8 206 470
- US-B2- 6 550 250
- US-B2- 7 971 425

## Description

### FIELD OF THE INVENTION

The invention is directed to methods and apparatuses for preparing an aqueous urea reactant for injection in a selective catalytic reduction system for an engine exhaust.

### BACKGROUND AND SUMMARY

Selective catalytic reduction (SCR) to eliminate oxides of nitrogen (NOx) from combustion exhaust gas has been used on stationary apparatuses, power plants and boilers for example, for many years. As is known, SCR works by reacting ammonia, or another reagent, and NOx in the presence of a catalyst to convert NOx to nitrogen gas and water vapor.

In more recent years, this method has gained interest for use in mobile applications, for example, for use with engine exhaust in road vehicles, trains, and marine vessels. As mentioned, one version of the SCR process uses ammonia to convert NOx to nitrogen gas and water. To avoid carrying ammonia, some systems use an aqueous urea solution, which is stored on-board the vehicle in a supply tank. The aqueous urea solution is introduced into the exhaust flow, and in the presence of heat and water, decomposes into ammonia and CO2. The ammonia in the presence of an SCR catalyst heated to an operative temperature reduces NOx in the combustion gases to nitrogen and water vapor.

Aqueous urea is used (as opposed to other forms such as anhydrous ammonia) due to the stability of the solution, ease of delivery into exhaust, and relative ease in distribution to the vehicles and transport on the vehicles. Aqueous urea solution is commonly transported, stored, and used as a 32.5% urea solution because this concentration has the optimum freezing point suppression.

The process of decomposing urea into ammonia is an endothermic reaction. When an aqueous urea solution is injected into an exhaust gas flow, the decomposition process consumes exhaust heat energy which would otherwise be available for heating the catalyst. Water is needed to decompose urea. A stoichiometric ratio is 3.33 grams of urea to 1 gram of water, which, in solution, is 76.9% by weight urea and 23.1% water. The commercially available 32.5% aqueous urea solution includes a water fraction of 67.5%, which is in excess of a stoichiometric amount. Additional water vapor is present in combustion exhaust, further adding to the excessive amount of water present to decompose urea. The excess water in the 32.5% aqueous solution is a diluent in the NOx reduction reaction and also consumes exhaust energy to heat the water mass to the vapor state and then to the exhaust system temperature. The use of exhaust energy for heating water cools the exhaust gas, making it more difficult to keep the SCR catalyst surface at its operating temperature.

Providing urea which is usable in a vehicle SCR catalyst may be performed in different ways. US 2012/0045378A discloses a system and a method for heating an aqueous urea solution using heat which is stored in a phase changing material. The heat comes from exhaust gases of an internal combustion engine. Excess water is evaporated. EP 1 338 562A discloses a process and a method for feeding amounts of dry urea from a vessel into a reactor where it is 'blitz' thermolyzed to a mixture of ammonia and isocyanic acid (HNCO). The mixture is catalytically treated in presence of water to convert the HNCO to ammonia and carbon dioxide.

The invention is a system and method for preparing an aqueous urea solution for injection into an exhaust stream for an SCR system by removing excess water from the solution. A solution having a lower concentration of water results in less water to absorb exhaust heat, so the method and system of the invention advantageously conserves exhaust heat energy and improves SCR performance. The system and method according to the invention can be actively controlled during vehicle operation and conveniently utilizes the commercially available 32.5% urea solution as the starting material.

An apparatus according to the invention includes a urea solution conditioning tank having an inlet to receive an unconditioned urea solution and an outlet, and, a device for removing water from the urea solution.

According to the invention, the device for removing water from the urea solution includes a device for lowering a vapor pressure in the tank, or a heater for heating the urea solution in the tank. According to a preferred embodiment, both a device for lowering vapor pressure in the tank and a heater are used to remove water from the urea solution.

According to another aspect of the invention, the device for lowering the vapor pressure includes a venturi tube connected by an evaporation line to the conditioning tank.

An apparatus according to the invention includes a sensor generating a signal indicating a concentration of urea in the tank and a controller connected to receive the signal and further connected and configured to control a heater and the device for lowering the vapor pressure in the tank. The controller is configured and connected to control a flow of unconditioned urea solution to the conditioning tank. The controller is also configured to control the heater to maintain the solution in the conditioning tank at a temperature sufficiently high to prevent precipitation of urea out of the higher concentrated solution.

An apparatus and method according to the invention could be used advantageously with an SCR system using an aqueous urea solution as the reactant. For example, the invention could be incorporated in an SCR system for vehicles, such as trucks or cars. The invention could also be used with a stationary combustion apparatus of many configurations, such as gas turbines, boilers, cogeneration, etc.

### BRIEF DESCRIPTION OF THE DRAWINGS

The invention will be better understood by reference to the following detailed description in conjunction with the appended drawings, in which:
Figure 1 is a schematic of an internal combustion engine with a selective catalytic reduction system;
Figure 2 is a schematic of a conditioning apparatus according to the invention;
Figure 3 is a schematic of an alternative embodiment of a conditioning apparatus according to the invention; and,
Figure 4 is a schematic of a conditioning tank and controller of the apparatus of Figure 2 or Figure 3.

### DETAILED DESCRIPTION

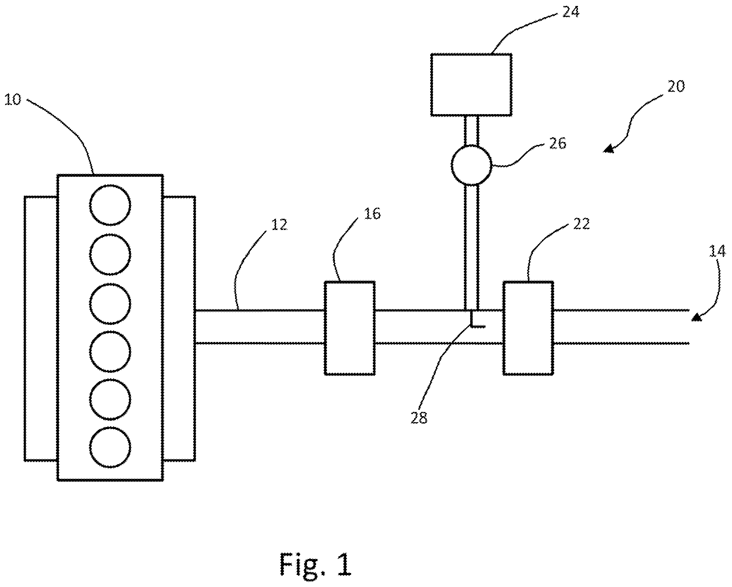

Figure 1 illustrates schematically an SCR system incorporated in a diesel engine apparatus, as may be found on a heavy duty truck. Combustion in a diesel engine 10 produces exhaust gas, which is carried from the engine by an exhaust conduit 12 for release at an outlet 14 into the air. An exhaust aftertreatment system removes certain constituents of the exhaust gas prior to release to the environment. As an example of such a system, the illustrated aftertreatment system includes a particulate filter 16 to remove particulate matter (e.g., soot) from the exhaust. A selective catalytic reduction (SCR) apparatus, which includes an SCR catalyst 22 connected to the exhaust conduit 12 downstream of the particulate filter, converts nitrogen oxides in the exhaust gas to nitrogen and water. The SCR apparatus includes a storage tank 24 for holding a reactant in liquid form, in current use, an aqueous urea solution reactant. A pump 26 moves the aqueous urea solution to an injector 28, which introduces the solution into the exhaust gas flow upstream of the SCR catalyst 22. The urea in the solution decomposes to ammonia and carbon dioxide and mixes and flows with the exhaust gas into the catalyst 22, where the ammonia is adsorbed onto the catalyst. In the presence of the catalyst, the ammonia reduces oxides of nitrogen and oxygen to nitrogen and water. The reduction reaction is temperature dependent and operates most effectively between about 350°C to 450°C, but can occur at a temperature as low as about 250°C depending on factors such as the catalyst material and structure and residence time of the reactants in the catalyst body. It is necessary, therefore, to maintain the catalyst at the operating temperature for effective results.

The aqueous urea solution in the storage tank 24 contains water in excess of that needed for the urea decomposition and is at or near ambient temperature. When the urea solution is injected into an exhaust gas stream, energy in the exhaust gas is consumed to decompose urea into ammonia (an endothermic reaction), heat the water fraction from ambient temperature (or from the injection temperature if a heater is utilized) to the boiling point of water, overcome the water's latent heat of vaporization, and further heat the combined exhaust gas, water and urea to a final mixture temperature. This is energy not available to heat and/or maintain the temperature of the SCR catalyst. In current practice, to make up this lost heat energy, the engine may be operated to produce higher exhaust gas temperatures or a so-called the injector may be provided to inject hydrocarbon into the exhaust gas. Both are undesirable as increasing fuel consumption and CO2 emissions.

Aqueous urea solution is commercially available under the name diesel exhaust fluid as an aqueous solution of 32.5% by weight urea concentration. The stoichiometric ratio of urea to water needed to completely decompose urea to ammonia is 3.33 grams of urea to grams of water. A 32.5% urea solution is 67.5% water, a ratio of 6.92 grams of water per gram of urea. This amount of water is far in excess of that required, especially when considering the water vapor normally present in the exhaust stream of diesel combustion. While excess water is needed to ensure complete decomposition and is beneficial to prevent urea crystallization, there are, as described above, drawbacks.

According to a method and apparatus of the invention, a 32.5% urea solution as is commercially available is conditioned to remove at least some excess water prior to injection into the exhaust gas for the SCR reaction. The removal of water from the solution prior to injection results in less exhaust heat energy being consumed to heat excess water, making that energy available to heat the catalyst, which results in lessening the need to add energy to the exhaust gas.

A 76.9% urea concentration is a preferred target concentration because the conditioned solution has 3.33 grams of urea to grams of water, which is the stoichiometric ratio for the decomposition reaction. With a solution prepared to about this target concentration, it is not necessary to rely on water vapor present in the exhaust gas, which may be disregarded in controlling the conditioning process.

The benefit of the invention in removing water from the solution can be achieved by removing an amount of water less than necessary to obtain a stoichiometric ratio of urea to water in the solution. Accordingly, the solution may be conditioned to be at a target urea concentration greater than 32.5%. An actual target concentration may be set with consideration of certain limiting factors. One factor is that engine exhaust gases contain water vapor which can be used in the urea decomposition process, so maintaining the solution at a stoichiometric ratio is not strictly necessary. Another consideration is that to prevent the urea in the higher concentration conditioned solution from precipitating out of solution, it is necessary to keep the solution at an appropriate temperature. Table 1 shows the minimum temperature necessary to maintain solubility of urea in solutions of various concentrations and at atmospheric pressure.

**Table 1: Solubility Temperature for various Urea Concentrations**

| Temp °C | 20 | 40 | 60 | 80 | 100 |
|---|---|---|---|---|---|
| g Urea/100 g Water | 108 | 167 | 251 | 400 | 733 |
| g Urea/g Water | 1.08 | 1.67 | 2.51 | 4 | 7.33 |

As the urea concentration increases, the temperature necessary for maintaining urea in solution increases. At a urea concentration of approximately 3.33 grams urea per gram water, the minimum temperature necessary to maintain solubility of urea is about 73°C. Another consideration, therefore, is the ability to maintain the solubility temperature of the solution in the container. Diesel exhaust fluid, the commercially available aqueous urea solution, is reported by various sources to have a boiling point of between 100°C to 104°C at atmospheric pressure. Another consideration may be to avoid boiling or avoid continuous or prolonged boiling of the solution, which is a function of the temperature and the vapor pressure in the container. Another consideration is whether the concentrated solution would clog the injector by forming crystals.

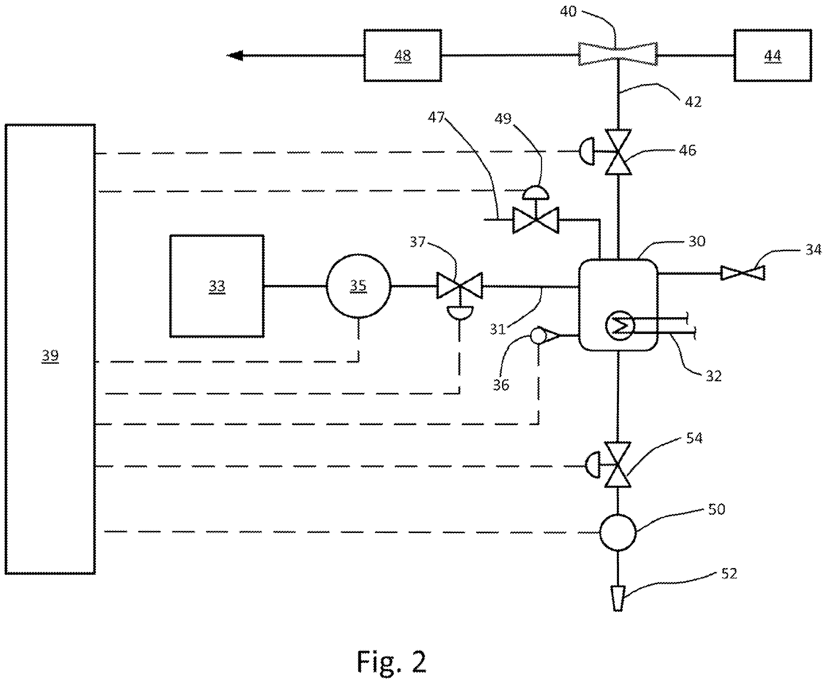

Figure 2 is a schematic drawing of a urea solution conditioning apparatus in accord with an embodiment of the invention. The apparatus includes a conditioning tank 30 that receives unconditioned aqueous urea solution (as is commercially available) and removes water from the solution to prepare an injection quality solution. The conditioning tank 30 is connected by a supply conduit 31 to receive unconditioned solution from a storage tank 33. The storage tank 33 holds the unconditioned solution as it is received from a supply source, such as a fuel station. A pump 35 disposed on the supply conduit 31 pumps solution from the storage tank 33 to the conditioning tank 30. A control valve 37 controls the flow of the unconditioned solution. A controller 39 is appropriately programmed to control the operation of the pump 35 and control valve 37.

Conditioned solution is injected into the exhaust gas, typically flowing through a conduit (not illustrated), by an injector pump 50 and injector nozzle 52.

Unconditioned aqueous urea solution is prepared for injection in the conditioning tank 30 by removing water from the solution. According to the invention, water is removed by evaporation of the water to the vapor phase and removal of the water vapor from the tank 30. Water can be evaporated by heating the solution, lowering the vapor pressure in the tank, or a combination of heating and lowering the vapor pressure.

According to an embodiment of the invention as illustrated in Figure 2, a vacuum evaporation technique is used. Vacuum evaporation lowers the vapor pressure in the tank 30, causing water to evaporate at a lower temperature. According to one embodiment of the invention, a venturi tube 40 is connected at its throat to an evaporation line 42 connected to the tank 30. Air from a source 44 is directed to flow through the venturi tube 40 to lower the pressure in the evaporation line 42 and accordingly, the tank 30. The source 44 may be a compressor of a turbocharger compressor or the exhaust flow downstream of the SCR catalyst from which pressurized air may be diverted. The lowered pressure in the venturi tube 40 where the evaporation line 42 connects draws air and water vapor from the tank 30 to lower the tank pressure below ambient pressure, for example, to approximately 80 to 90 kPa. A proportional valve 46 is connected on the evaporation line 42 to control the water vapor flow out of the conditioning tank. The extracted water vapor can be collected in a collection tank 48 to be introduced at another location in the engine apparatus, for example, at the compressor outlet to lower thermal NOx in cylinder or downstream of the SCR system. Of course, water vapor removed from the conditioning tank 30 should not be introduced in the exhaust upstream of the SCR as this eliminates the benefit of preserving exhaust energy to increase efficiency. If not used on the truck, water collected in the collection tank 48 may be drained at a fuelling stop or during vehicle maintenance. Alternatively, the extracted water vapor may be exhausted to the air.

Alternatively, other devices for lowering the vapor pressure in the tank 30 may be use, for example, a fan or pump to draw water vapor and air from the conditioning tank.

Evaporation may also be facilitated by heating the solution. A heater 32 may be provided in the conditioning tank 30 to heat the solution to speed or increase evaporation. The heater 32 may be an electrically powered heater, a heat exchanger conducting a working fluid such as engine coolant, or another suitable device.

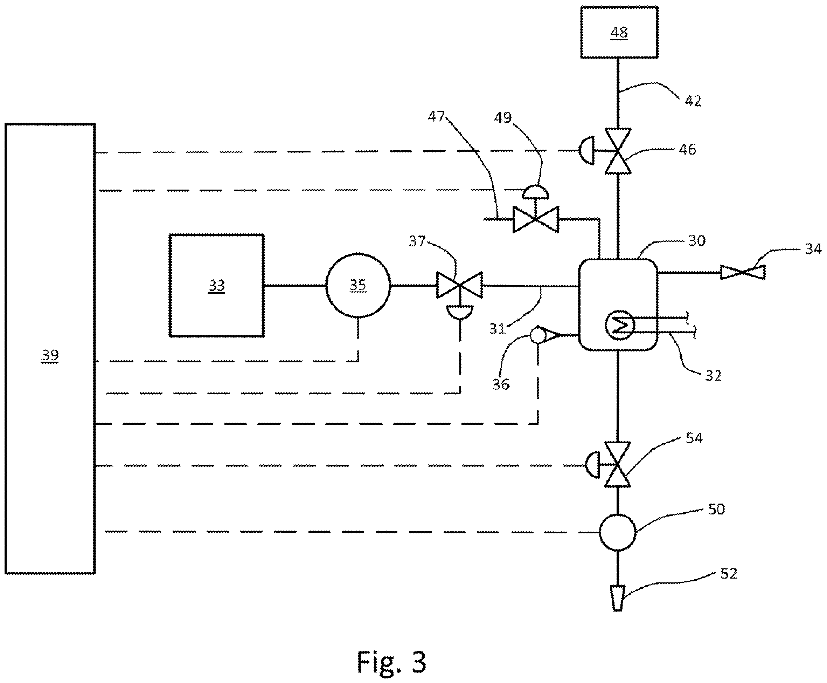

Alternatively, as mentioned above, evaporation may be by heating the tank. Figure 3 shows an alternative embodiment of the apparatus in which a heater 32 is positioned in the conditioning tank 30 to heat the solution to a temperature for water evaporation. Water vapor may be removed from the tank 30 by the evaporation line 42 to a collection tank 48. The amount of water vapor removed would be controlled by operation of the heater (e.g., controlling the heater output) and operation of the valve 46 as described above.

As mentioned above, to prevent the urea in the higher concentration conditioned solution from precipitating out of solution, it is necessary to keep the solution at an appropriate temperature, and a heater is provided for this purpose. The heater 32, described above for heating the solution to facilitate evaporation of excess water, may be conveniently used to heat the solution to maintain urea in solution. The heater 32 is controlled to heat the fluid to the appropriate temperature, which may be referenced in Table 1, above. The conditioning tank 30 may be insulated to help maintain the solubility temperature and reduce the heating load on the heater.

Maintaining solubility of the conditioned solution may be facilitated keeping the conditioning tank 30 above ambient pressure. This may be advantageous if the conditioning process is run in batches, that is, a quantity of solution is conditioned and the process stopped as the prepared solution is consumed (to be started when the quantity in the tank 30 drops to a threshold level). A pressure air line 47 connected to a source of pressurized air on the vehicle and controlled by a valve 49 may be connected to deliver pressurized air to the conditioning tank 30. The controller 39 may accordingly be configured to monitor the conditioning process and the internal pressure and allow pressurized air into the tank 30 when the conditioning process has stopped. Heavy trucks carry pressurized air sources, for example, air compressors and tanks, which may conveniently be utilized as the pressurized air source.

According to the invention and optionally, a pressure relief valve 34 may be provided on the conditioning tank 30 in the event heating the solution causes pressure to increase to a level with potential for damage to the tank or other components. A pressure increase might occur, for example, after the evaporation valve 46 is closed.

According to another aspect of the invention, a vent 36 may be provided on the tank to allow the tank pressure to come back to ambient after the evaporation valve 46 is closed. The vent 36 may be electronically controlled so that the tank is not vented when the evaporation process, in particular, the lowering of vapor pressure, is being performed. The controller 39 is configured to control the vent 36 in conjunction with the valve 46, and also to monitor pressure and allow venting to avoid excessively low pressure in the conditioning tank 30.

The storage tank 33 and conditioning tank 30 may advantageously be arranged to allow the conditioned fluid to flow from the conditioning tank into the storage tank when the engine (not shown) is shut down for an extended period. With the engine shut down, and no power available to the heater, the conditioned solution will cool and urea will precipitate out of solution. The valve 37 is controlled to allow the conditioned solution to flow back into the storage tank 33 and mix with the more dilute solution to prevent precipitation. If the conditioning tank 30 and storage tank 33 are not positioned to let gravity drain the conditioning tank into the storage tank, the pump 35 can be operated to pump the conditioned solution to the storage tank. The controller 39 may include a timer that measures a predetermined time interval following engine shutdown to control opening the valve 37 to drain the conditioning tank 30. Alternatively, the controller 39 is configured to monitor the temperature of the solution in the conditioning tank 30 via the temperature sensor associated with a quality sensor or the heater 32 (see the discussion below in connection with Figure 3), and open the valve 35 to drain the fluid to the storage tank 33 before the temperature drops so far as to allow urea to precipitate out of the solution. Insulation on the conditioning tank 30 would be helpful to maintaining the solution at solubility temperature after engine shutdown.

Conditioned solution can be batch processed, that is, prepared in sufficient quantity for the vehicle's working time, for example, daily or a number of hours. At engine start up, a quantity of unconditioned solution sufficient for the engine's expected operating time will be pumped from the storage tank 33 into the conditioning tank 30 and the conditioning process initiated. Once the solution is conditioned to the desired urea concentration, the conditioning process will stop. The valve 46 on the evaporation line 42 will close to prevent more water from being removed from the solution.

For a batch process system, the conditioning tank 30 may then be selected to be an appropriate size, determined by the rate of conditioned solution consumption, which may be, for example, about two gallons for a day's operation.

Alternatively, the system may be configured for continuous processing to produce urea as needed for injection. Continuous processing involves preparing only a small volume of conditioned solution, calculated, for example, for steady state engine operating conditions with some additional volume to accommodate transient conditions. Accordingly, a conditioning tank of an appropriate size is selected, which may be on the order of a liter. A small conditioning tank keeps the heating requirements low and minimizes the effect of the unused conditioned solution in the conditioning tank being drained back to the storage tank when the vehicle is shutdown. Alternatively, larger batches could also be produced in a larger conditioning tank and stored in a working day tank for injection, but if the working tank needs to drain a large quantity back to the main tank, it could significantly increase the urea concentration of the main tank.

A system according to the invention includes a controller 39. The controller 39 may be a microprocessor based device programmed to operate the system. Turning to Figure 2, the controller 39 is connected to the proportional pump 35 and proportional control valve 37 to control the flow urea into the conditioning tank at engine start up or as demanded, and controls the valve to allow unused conditioned solution to drain back into the storage tank 33 at engine shutdown. The controller 39 is also connected to the proportional valve 46 on the evaporation line 42 to control the process of water vapor removal from the conditioning tank. The controller 39 is connected to a proportional valve 54 controlling flow of conditioned solution to the injector pump 50 and injector nozzle 52, and is connected to the injector pump 50 to control injection of solution into the exhaust gas. For controlling the injector pump 50 and injector 52, the controller 39 will be connected to receive signals from other systems or sensors on the vehicle, such as NOx sensors disposed in the exhaust conduit (not illustrated) as is known to those skilled in the art. For convenience, the controller 39 may be the engine control unit of the vehicle.

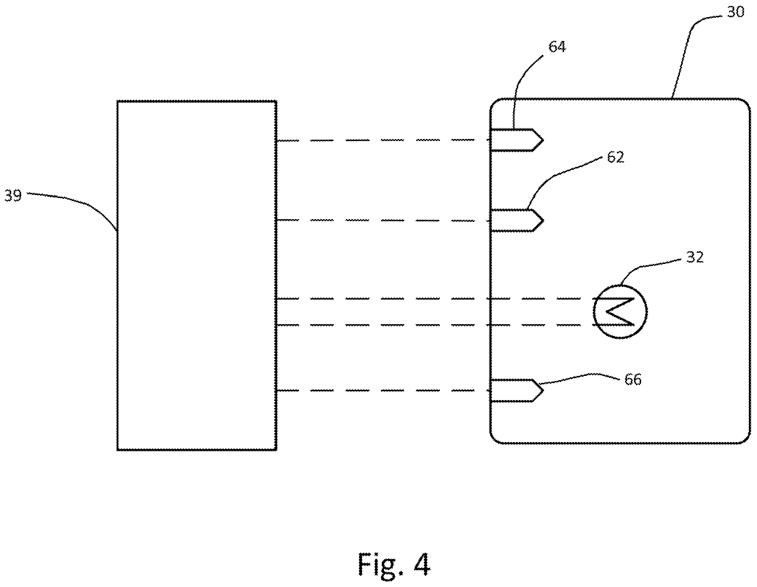

Turning to Figure 4, the controller 39 is connected to the heater 32 positioned in the conditioning tank to control the heater function. If the heater 32 is an electrical resistance heater, for example, the controller controls the electrical power to the heater. If a heat exchanger is used as the heater, the controller 39 is connected to operate a valve controlling flow of the hot working fluid through the heater. The heater 32 includes a temperature sensor providing a temperature signal to the controller 39 as an input for heater control.

The controller 39 is also connected to sensors mounted in the tank to receive signals for controlling the conditioning process and injection of the solution in the exhaust conduit. A tank pressure sensor 62 is provided to monitor and control the vacuum applied to the tank. This signal is used for controlling the valve 46 on the evaporation line 42 to maintain the desired vapor pressure in the conditioning tank 30. A level sensor 64 is provided to control filling and evacuation of the conditioning tank 30, through control of the pump 35 and valve 37. A urea quality sensor 66 is provided to sense the concentration of urea in the solution in the conditioning tank 30 for control of the conditioning process, which as described above involves heating the solution and evaporation of water to reach the desired target concentration. The controller 39 includes feedback control to add unconditioned 32.5% urea solution from the supply tank 33 if the desired urea concentration is exceeded.

A method according to the invention includes the steps of storing unconditioned aqueous urea, which may be at 32.5% urea by weight concentration, in a supply tank, pumping a quantity of unconditioned aqueous urea from the supply tank to a conditioning tank, and removing water from the aqueous urea in the conditioning tank to increase a concentration of urea in the aqueous urea to a target concentration.

The method may further include the steps of determining a concentration of urea in the aqueous urea in the conditioning tank and adding unconditioned urea solution to the conditioning tank if the target concentration is exceeded.

The step of removing water includes reducing the pressure in the conditioning tank, heating the solution to evaporate water from the solution, and drawing the evaporated water from the conditioning tank.

According to a preferred embodiment of the method, the step of heating the solution in the conditioning tank includes heating the solution to a temperature of at least 73°C.

According to an embodiment of the invention, the method includes pumping a predetermined quantity of unconditioned aqueous urea into the conditioning tank to a feed tank, and conditioning the predetermined quantity to a target urea concentration, wherein the predetermined quantity of unconditioned aqueous urea calculated to be sufficient for operation of the SCR system for a predetermined period of time.

According to an alternative embodiment of the method, the conditioning method is operated continuously when an engine associated with the selective catalytic reduction system is running.

According to the invention, the target urea concentration is greater than 32.5% urea and preferably about 76.9% urea.

The invention has been described in connection with the 32.5% urea solution that is commercially available. However, the invention should be understood as being applicable to conditioning any reactant for exhaust gas treatment containing an excess of water that would benefit from the removal of water prior to injection into an exhaust stream.

The invention has been described in terms of preferred components, embodiments and method steps; however the scope of the invention is determined by the appended claims.

## Claims

1. An apparatus for vehicle on-board conditioning an aqueous urea solution for injection in a vehicle engine exhaust treatment system, comprising:
a storage tank (33) to receive and store commercially-available aqueous urea solution having a urea concentration of 32.5 % by weight as unconditioned urea solution,
an urea solution conditioning tank (30) having an inlet to receive unconditioned urea solution from the storage tank (33) and having an outlet, and,
a device for removing water from the urea solution in the urea solution conditioning tank (30), and,
an injector nozzle (52) connected to receive urea solution from the urea solution conditioning tank (30) and inject the received urea solution into a vehicle exhaust flow.

2. The apparatus of claim 1, wherein the device for removing water from the urea solution comprises a device for lowering a vapor pressure in the conditioning tank (30).

3. The apparatus of claim 2, wherein the device for lowering the vapor pressure includes a venturi tube (40) connected by an evaporation line (42) to the conditioning tank (30).

4. The apparatus of claim 2, wherein the device for removing water from the urea solution comprises a heater (32) for heating the urea solution in the conditioning tank (30).

5. The apparatus of claim 1, comprising a sensor generating a signal indicating a concentration of urea in the conditioning tank (30) and a controller (39) connected to receive the signal and further connected and configured to control the device for removing water from the urea solution.

6. The apparatus of claim 5, wherein the controller (39) is configured and connected to control a flow of unconditioned urea solution to the conditioning tank (30).

7. The apparatus of claim 1, comprising a line (47) connected to the conditioning tank (30) to deliver pressurized air from a source on the vehicle.

8. A method of conditioning aqueous urea solution for injection in a selective catalytic reduction system for an internal combustion engine exhaust, comprising the steps of:
storing commercially-available aqueous urea solution having a urea concentration of 32.5 % by weight in a storage tank (33) at an initial urea concentration;
pumping a quantity of the aqueous urea solution from the storage tank (33) to a conditioning tank (30);
removing water from the aqueous urea solution in the conditioning tank (30) to increase a concentration of urea in the aqueous urea solution to a target concentration; and,
injecting aqueous urea at the target concentration into an engine exhaust flow for a selective catalytic reduction system.

9. The method of claim 8, wherein the step of removing water comprises lowering a pressure in the conditioning tank (30) and conducting evaporated water from the conditioning tank (30).

10. The method of claim 8, comprising heating the aqueous urea solution in the conditioning tank (30) to evaporate water from the aqueous urea solution.

11. The method of claim 8, comprising heating the aqueous urea solution in the conditioning tank (30) to maintain a temperature sufficient to avoid precipitation of urea from the solution.

12. The method of claim 8, comprising sensing a level of solution in the conditioning tank (30) and responsive to sensing a threshold level, pumping a predetermined quantity of aqueous urea into the conditioning tank (30).

13. The method as claimed in claim 8, wherein the target concentration of urea in the conditioned aqueous urea solution is greater than 32.5% urea.

14. The method of claim 8, wherein the target concentration of urea in the conditioned aqueous urea solution is about 76.9 % urea.

15. The method of claim 8, comprising determining a concentration of urea in the aqueous urea in the conditioning tank (30), and, adding unconditioned urea solution to the conditioning tank (30) if the target concentration is exceeded by a predetermined amount.

## Patentansprüche

1. Vorrichtung zur Aufbereitung einer wässrigen Harnstofflösung an Bord eines Fahrzeugs zur Einspritzung in ein Abgasbehandlungssystem eines Fahrzeugmotors, umfassend:
einen Speicherbehälter (33) zur Aufnahme und Speicherung handelsüblicher wässriger Harnstofflösung mit einer Harnstoffkonzentration von 32,5 Gew.-% als unaufbereitete Harnstofflösung,
einen Harnstofflösungs-Aufbereitungsbehälter (30) mit einem Einlass zur Aufnahme unbehandelter Harnstofflösung aus dem Speicherbehälter (33) und mit einem Auslass, und
eine Vorrichtung zur Entfernung von Wasser aus der Harnstofflösung in dem Harnstofflösungs-Aufbereitungsbehälter (30), und
eine Einspritzdüse (52), die so verbunden ist, dass sie Harnstofflösung aus dem Harnstofflösungs-Aufbereitungsbehälter (30) aufnimmt und die aufgenommene Harnstofflösung in eine Abgasströmung des Fahrzeugs einspritzt.

2. Verfahren nach Anspruch 1, wobei die Vorrichtung zur Entfernung von Wasser aus der Harnstofflösung eine Einrichtung zum Verringern eines Dampfdrucks in dem Aufbereitungsbehälter (30) umfasst.

3. Vorrichtung nach Anspruch 2, wobei die Einrichtung zur Verringerung des Dampfdrucks ein Venturi-Rohr (40) aufweist, das durch eine Verdampfungsleitung (42) mit dem Aufbereitungsbehälter (30) verbunden ist.

4. Vorrichtung nach Anspruch 2, wobei die Einrichtung zur Entfernung von Wasser aus der Harnstofflösung eine Heizeinrichtung (32) zum Erhitzen der Harnstofflösung in dem Aufbereitungsbehälter (30) umfasst.

5. Vorrichtung nach Anspruch 1, umfassend einen Sensor, der ein Signal erzeugt, das eine Konzentration von Harnstoff in dem Aufbereitungsbehälter (30) anzeigt, sowie eine Steuerungseinrichtung (39), die so verbunden ist, dass sie das Signal empfängt, und weiterhin so verbunden und konfiguriert ist, dass sie die Einrichtung zur Entfernung von Wasser aus der Harnstofflösung steuert.

6. Vorrichtung nach Anspruch 5, wobei die Steuerungseinrichtung (39) so konfiguriert und verbunden ist, dass sie eine Strömung unaufbereiteter Harnstofflösung zu dem Aufbereitungsbehälter (30) steuert.

7. Vorrichtung nach Anspruch 1, umfassend eine Leitung (47), die mit dem Aufbereitungsbehälter (30) verbunden ist, um Druckluft von einer Quelle an dem Fahrzeug zu liefern.

8. Verfahren zum Aufbereiten wässriger Harnstofflösung zum Einspritzen in ein selektives katalytisches Reduktionssystem für das Abgas eines Verbrennungsmotors, das die Schritte umfasst:
Speichern von handelsüblicher wässriger Harnstofflösung mit einer Harnstoffkonzentration von 32,5 Gew.-% in einem Speicherbehälter (33) bei einer anfänglichen Harnstoffkonzentration;
Pumpen einer Menge der wässrigen Harnstofflösung aus dem Speicherbehälter (33) in einen Aufbereitungsbehälter (30);
Entfernen von Wasser aus der wässrigen Harnstofflösung in dem Aufbereitungsbehälter (30) zur Erhöhung einer Harnstoffkonzentration in der wässrigen Harnstofflösung auf eine Zielkonzentration; und
Einspritzen von wässrigem Harnstoff mit der Ziel konzentration in eine Abgasströmung eines Motors für ein selektives katalytisches Reduktionssystem.

9. Verfahren nach Anspruch 8, wobei der Schritt des Entfernens von Wasser das Senken eines Drucks in dem Aufbereitungsbehälter (30) und das Leiten von verdampftem Wasser aus dem Aufbereitungsbehälter (30) umfasst.

10. Verfahren nach Anspruch 8, umfassend das Erhitzen der wässrigen Harnstofflösung in dem Aufbereitungsbehälter (30) zum Verdampfen von Wasser aus der wässrigen Harnstofflösung.

11. Verfahren nach Anspruch 8, umfassend das Erhitzen der wässrigen Harnstofflösung in dem Aufbereitungsbehälter (30) zum Aufrechterhalten einer Temperatur, die ausreicht, um eine Ausfällung des Harnstoffs aus der Lösung zu verhindern.

12. Verfahren nach Anspruch 8, umfassend das Erfassen eines Füllstands der Lösung in dem Aufbereitungsbehälter (30) und das Pumpen einer vorher bestimmten Menge an wässrigem Harnstoff in den Aufbereitungsbehälter (30) als Reaktion auf das Erfassen eines Schwellenwerts.

13. Verfahren nach Anspruch 8, wobei die Ziel konzentration von Harnstoff in der aufbereiteten wässrigen Harnstofflösung höher als 32,5% Harnstoff ist.

14. Verfahren nach Anspruch 8, wobei die Zielkonzentration von Harnstoff in der aufbereiteten wässrigen Harnstofflösung ungefähr 76,9% Harnstoff ist.

15. Verfahren nach Anspruch 8, umfassend die Bestimmung einer Harnstoffkonzentration in dem wässrigen Harnstoff in dem Aufbereitungsbehälter (30) und die Hinzufügung von unaufbereiteter Harnstofflösung in den Aufbereitungsbehälter (30), wenn die Zielkonzentration um einen vorher bestimmten Betrag überschritten wird.

## Revendications

1. Appareil pour conditionner à bord d'un véhicule une solution d'urée aqueuse pour injection dans un système de traitement de gaz d'échappement de moteur de véhicule, comprenant :
un réservoir de stockage (33) pour recevoir et stocker une solution d'urée aqueuse disponible dans le commerce ayant une concentration d'urée de 32,5% en poids sous forme de solution d'urée non conditionnée,
un réservoir de conditionnement de solution d'urée (30) ayant une entrée pour recevoir une solution d'urée non conditionnée à partir du réservoir de stockage (33) et ayant une sortie, et,
un dispositif pour éliminer l'eau de la solution d'urée dans le réservoir de conditionnement de solution d'urée (30), et,
une buse d'injecteur (52) raccordée pour recevoir une solution d'urée à partir du réservoir de conditionnement de solution d'urée (30) et pour injecter la solution d'urée reçue dans un flux de gaz d'échappement de véhicule.

2. Appareil de la revendication 1, dans lequel le dispositif pour éliminer l'eau de la solution d'urée comprend un dispositif pour abaisser une pression de vapeur dans le réservoir de conditionnement (30).

3. Appareil de la revendication 2, dans lequel le dispositif pour abaisser la pression de vapeur comporte un tube de venturi (40) raccordé par un conduit d'évaporation (42) au réservoir de conditionnement (30).

4. Appareil de la revendication 2, dans lequel le dispositif pour éliminer l'eau de la solution d'urée comprend un dispositif de chauffage (32) pour chauffer la solution d'urée dans le réservoir de conditionnement (30).

5. Appareil de la revendication 1, comprenant un capteur générant un signal indiquant une concentration d'urée dans le réservoir de conditionnement (30) et un dispositif de commande (39) relié pour recevoir le signal et en outre relié et configuré pour commander le dispositif pour éliminer l'eau de la solution d'urée.

6. Appareil de la revendication 5, dans lequel le dispositif de commande (39) est configuré et relié pour réguler un débit de solution d'urée non conditionnée vers le réservoir de conditionnement (30).

7. Appareil de la revendication 1, comprenant un conduit (47) raccordé au réservoir de conditionnement (30) pour fournir de l'air sous pression à partir d'une source sur le véhicule.

8. Procédé de conditionnement d'une solution d'urée aqueuse pour injection dans un système de réduction catalytique sélective pour un échappement de moteur à combustion interne, comprenant les étapes qui consistent :
à stocker une solution d'urée aqueuse disponible dans le commerce ayant une concentration d'urée de 32,5% en poids dans un réservoir de stockage (33) à une concentration d'urée initiale ;
à pomper une quantité de la solution d'urée aqueuse du réservoir de stockage (33) vers un réservoir de conditionnement (30) ;
à éliminer l'eau de la solution d'urée aqueuse dans le réservoir de conditionnement (30) pour augmenter une concentration d'urée dans la solution d'urée aqueuse jusqu'à une concentration cible ; et,
à injecter l'urée aqueuse à la concentration cible dans un flux de gaz d'échappement de moteur pour un système de réduction catalytique sélective.

9. Procédé de la revendication 8, dans lequel l'étape d'élimination de l'eau comprend le fait d'abaisser une pression dans le réservoir de conditionnement (30) et de conduire l'eau évaporée depuis le réservoir de conditionnement (30).

10. Procédé de la revendication 8, comprenant le fait de chauffer la solution d'urée aqueuse dans le réservoir de conditionnement (30) pour faire évaporer l'eau de la solution d'urée aqueuse.

11. Procédé de la revendication 8, comprenant le fait de chauffer la solution d'urée aqueuse dans le réservoir de conditionnement (30) de manière à maintenir une température suffisante pour éviter la précipitation de l'urée à partir de la solution.

12. Procédé de la revendication 8, comprenant le fait de détecter un niveau de solution dans le réservoir de conditionnement (30) et en réponse à la détection d'un niveau seuil, de pomper une quantité prédéterminée d'urée aqueuse dans le réservoir de conditionnement (30).

13. Procédé de la revendication 8, dans lequel la concentration cible d'urée dans la solution d'urée aqueuse conditionnée est supérieure à 32,5% d'urée.

14. Procédé de la revendication 8, dans lequel la concentration cible d'urée dans la solution d'urée aqueuse conditionnée est d'environ 76,9% d'urée.

15. Procédé de la revendication 8, comprenant le fait de déterminer une concentration d'urée dans l'urée aqueuse dans le réservoir de conditionnement (30), et d'ajouter une solution d'urée non conditionnée au réservoir de conditionnement (30) si la concentration cible est dépassée d'une quantité prédéterminée.
